# EUROPÄISCHE PATENTSCHRIFT

(11) **EP 1 873 424 B1**
(45) Veröffentlichungstag und Bekanntmachung des Hinweises auf die Patenterteilung: **25.02.2009**
(21) Anmeldenummer: 07012727.9
(22) Anmeldetag: 28.06.2007
(51) Int. Cl.: F16H 61/44, F16H 61/46, F16H 59/40, F16H 59/42

(54) **Hydrostatischer Antrieb und Verfahren zur Steuerung des hydrostatischen Antriebs**
Hydrostatic drive and control method therefore
Entrainement hydrostatique et procédé de commande de l'entrainement hydrostatique

(30) Priorität: 29.06.2006 DE 102006029903
(43) Veröffentlichungstag der Anmeldung: 02.01.2008
(73) Patentinhaber: Brueninghaus Hydromatik GmbH, 89275 Elchingen (DE)
(72) Erfinder: Sommer, Josef, 89610 Oberdischingen (DE); Wille, Tobias, 89233 Neu-Ulm (DE)
(74) Vertreter: Beder, Jens

(56) Entgegenhaltungen:
- EP-A1- 0 483 543
- WO-A-20/05111475
- DE-A1- 19 858 958

## Beschreibung

Die Erfindung betrifft einen hydrostatischen Antrieb mit zumindest einer Hydropumpeneinheit und einem ersten Hydromotor und zumindest einem zweiten Hydromotor sowie ein Verfahren zur Steuerung des hydrostatischen Antriebs. Die Merkmale des Oberbegriffes des Anspruches 1 oder 10 sind aus der WO 2005/111476 bekannt.

Aus der DE 102 19 849 A1 ist ein hydrostatischer Antrieb mit einer Hydropumpe und einem Hydromotor bekannt, wobei die Hydropumpe und der Hydromotor in einem geschlossenen hydraulischen Kreislauf miteinander verbunden sind. Der Hydromotor ist in seinem Schluckvolumen einstellbar. Zur Steuerung des Schluckvolumens des Hydromotors ist eine drehzahlabhängige Steuerung vorgeschlagen, bei der mittels einer Speisepumpe ein pumpendrehzahlabhängiger Steuerdruck erzeugt wird. Mit zunehmendem Steuerdruck wird der Hydromotor in Richtung kleineren Schluckvolumens verstellt und somit die Fahrgeschwindigkeit des angetriebenen Fahrzeugs erhöht. Die Steuerung ist rein elektrohydraulisch. Eine aufwändige elektronische Steuerung kann somit entfallen.

Bei dem bekannten hydrostatischen Antrieb ist es nachteilig, dass der einzelne Hydromotor lediglich einen begrenzten Schwenkwinkelbereich aufweist und somit die Fahrgeschwindigkeit des angetriebenen Fahrzeugs nur in einem kleinen Bereich variierbar ist.

Der Erfindung liegt die Aufgabe zugrunde, einen hydrostatischen Antrieb sowie ein Verfahren zu dessen Steuerung zu schaffen, wobei der hydrostatische Antrieb einen großen Geschwindigkeitsbereich ermöglicht und der mit einfachen Mitteln durch eine elektrohydraulische Steuerung realisierbar ist.

Die Aufgabe wird durch den erfindungsgemäßen hydrostatischen Antrieb mit den Merkmalen des Anspruchs 1 sowie das Verfahren mit den Merkmalen des Anspruchs 10 gelöst.

Der erfindungsgemäße hydrostatische Antrieb weist zumindest eine Hydropumpeneinheit, einen ersten Hydromotor und zumindest einen zweiten Hydromotor auf. Der erste Hydromotor und der zweite Hydromotor sind mit jeweils einer Eingangswelle eines Summiergetriebes verbunden. Zur Einstellung des Schluckvolumens der beiden Hydromotoren ist jeder der Hydromotoren mit einer eigenen, individuell verstellbaren Verstellvorrichtung ausgerüstet. Die Verstellvorrichtung wird jeweils mit einem von einer Drehzahl der Hydropumpeneinheit abhängigen Steuerdruck beaufschlagt. Zumindest die Verstellvorrichtung des zweiten Hydromotors ist in Abhängigkeit von der Fahrgeschwindigkeit mit dem drehzahlabhängigen ersten Steuerdruck oder einem höheren zweiten Steuerdruck beaufschlagbar. Die Verstellvorrichtung des zumindest einen zweiten Hydromotors wird bei Überschreiten eines ersten Grenzwerts durch die Fahrgeschwindigkeit mit dem höheren, zweiten Steuerdruck beaufschlagt.

Bei drehzahlabhängigen Steuerungen wird mit zunehmendem Steuerdruck an der Verstellvorrichtung der jeweiligen hydrostatischen Kolbenmaschine das Fördervolumen bzw. das Schluckvolumen des Hydromotors in Richtung Minimum verstellt. Durch das Beaufschlagen der Verstellvorrichtung des zumindest einen zweiten Hydromotors mit einem höheren zweiten Steuerdruck wird erreicht, dass oberhalb einer durch den Grenzwert vorgegebenen ersten Fahrgeschwindigkeit der entsprechende Hydromotor auf ein verschwindendes Schluckvolumen verstellt wird. Der gesamte durch die Hydropumpeneinheit geförderte Volumenstrom wird somit durch die verbleibenden Hydromotoren gefördert, die dementsprechend eine höhere Abtriebsdrehzahl erreichen. Der Fahrgeschwindigkeitsbereich des Fahrzeugs wird somit zu hohen Geschwindigkeiten hin vergrößert. Ferner ist bei geringen Drehzahlen durch die zumindest zwei zusammenwirkenden Hydromotoren ein hohes Moment verfügbar.

Zur drehzahlabhängigen Steuerung der Hydromotoren, welche mit dem Summiergetriebe verbunden sind, wird zunächst ein von der Drehzahl der Hydropumpeneinheit abhängiger erster Steuerdruck erzeugt. Zudem wird ein zweiter Steuerdruck erzeugt, der höher ist als der drehzahlabhängige erste Steuerdruck. Die Fahrgeschwindigkeit des durch den hydrostatischen Antrieb angetriebenen Fahrzeugs wird ermittelt und mit einem ersten Grenzwert verglichen. Unterhalb des ersten Grenzwerts wird der zumindest eine zweite Hydromotor zunächst in Abhängigkeit von dem drehzahlabhängigen ersten Steuerdruck durch Beaufschlagen der Stellvorrichtung mit dem ersten Steuerdruck geregelt. Dabei wird mit zunehmendem Steuerdruck der zumindest eine zweite Hydromotor in Richtung kleinerer Schwenkwinkel verstellt. Überschreitet die Fahrgeschwindigkeit den ersten Grenzwert, so wird die Verstellvorrichtung des zumindest einen zweiten Hydromotors mit dem höheren zweiten Steuerdruck beaufschlagt und so der Hydromotor auf ein verschwindendes Schluckvolumen gestellt.

Der erfindungsgemäße hydrostatische Antrieb sowie das erfindungsgemäße Verfahren haben den Vorteil, dass durch die Verwendung eines höherliegenden zweiten Steuerdrucks unabhängig von der tatsächlichen Höhe des drehzahlabhängigen Steuerdrucks der Hydromotor auf ein verschwindendes Schluckvolumens gestellt werden kann. Das Umschalten erfolgt allein aufgrund der festgestellten Fahrgeschwindigkeit.

Vorteilhafte Weiterbildungen der Erfindung sind in den Unteransprüchen ausgeführt.

Insbesondere ist es vorteilhaft, einen im Vergleich zu dem ersten Grenzwert niedrigeren zweiten Grenzwert vorzusehen, so dass bei Unterschreiten dieses zweiten Grenzwerts durch die Fahrgeschwindigkeit die drehzahlabhängige Regelung des zumindest einen zweiten Hydromotors wieder aufgenommen wird. Das Vorsehen des zweiten Grenzwerts, welcher niedriger als der erste Grenzwert liegt, hat den Vorteil, dass ein Hin- und Herschalten zwischen dem drehzahlabhängigen Regelbetrieb des Hydromotors und der Abschaltung durch Anlegen des höheren zweiten Steuerdrucks bei Fahrgeschwindigkeiten, die beispielsweise im Bereich des ersten Grenzwerts liegen, vermieden wird.

Besonders vorteilhaft wird zur Erzeugung des drehzahlabhängigen ersten Steuerdrucks sowie des höheren zweiten Steuerdrucks eine Speisepumpe eingesetzt, welche mit einem Speisesystem der Hydropumpeneinheit verbunden ist. Speisesysteme von Hydropumpeneinheiten verfügen in der Regel über eine Maßnahme zum Aufrechterhalten eines konstanten Speisedrucks. Der drehzahlabhängige Druck wird ausgehend von diesem Speisedruck volumenstromabhängig erzeugt und liegt unter dem Speisedruck.

Eine einfache Ausgestaltung ergibt sich, indem zum Wechsel zwischen dem ersten, drehzahlabhängigen Steuerdruck und dem zweiten, höheren Steuerdruck ein Umschaltventil eingesetzt wird. Das Umschaltventil ist gemäß einer bevorzugten Ausführungsform elektromagnetisch betätigt.

Zudem ist es vorteilhaft, die Verbindung zwischen dem zumindest einen zweiten Hydromotor und dem Summiergetriebe durch eine Kupplung unterbrechen zu können. Die Kupplung wird mittels des höheren zweiten Steuerdrucks betätigt. Bei Überschreiten des ersten Grenzwerts wird hierzu eine druckbeaufschlagbare Betätigungseinrichtung mit dem höheren zweiten Steuerdruck beaufschlagt, wobei die Zuführung des höheren zweiten Steuerdrucks über ein Schaltventil erfolgt. Das Schaltventil verbindet dabei die Betätigungseinrichtung der Kupplung mit dem Speisesystem oder einem Tankvolumen.

Das Betätigen des Umschaltventils sowie des Schaltventils für die Betätigungseinrichtung der Kupplung erfolgt vorzugsweise zeitversetzt. Das bedeutet, dass zunächst bei Überschreiten des ersten Grenzwerts durch die Fahrgeschwindigkeit die Verstellvorrichtung des zumindest einen zweiten Hydromotors mit dem höheren zweiten Steuerdruck beaufschlagt wird. Zeitversetzt hierzu wird die Kupplung betätigt, so dass der zumindest eine zweite Hydromotor von dem Summiergetriebe abgekuppelt wird. Die Kupplung ist vorzugsweise an der zweiten Eingangswelle des Summiergetriebes angeordnet. In dem höheren Fahrgeschwindigkeitsbereich wird somit vermieden, dass durch eine weiterhin bestehende Verbindung zwischen dem zumindest einen zweiten Hydromotor und der Getriebeausgangswelle existiert. Verluste, die durch das Mitschleppen eines auf Null gestellten zweiten Hydromotors entstehen, werden somit vermieden, wodurch Kraftstoffverbrauch gesenkt werden kann. Die Vorgehensweise ist einfach auf eine Mehrzahl von zweiten Hydromotoren erweiterbar, die gleichzeitig oder nacheinander abgeschaltet werden.

Zur Erfassung der Fahrgeschwindigkeit kann die Abtriebsdrehzahl des Summiergetriebes in einfacher Weise durch einen Drehzahlsensor erfasst werden. Alternativ hierzu ist die Ermittlung der Fahrgeschwindigkeit aufgrund einer Schwenkwinkeleinstellung des ersten Hydromotors möglich. Als weitere Alternative kann ein Tachosignal herangezogen werden.

Eine bevorzugte Ausführungsform des erfindungsgemäßen hydrostatischen Antriebs sowie des Verfahrens sind in der Zeichnung dargestellt und werden in der nachfolgenden Beschreibung näher erläutert. Es zeigen:
- Fig. 1: eine schematische Darstellung eines erfindungsgemäßen hydrostatischen Antriebs; und
- Fig. 2: ein Flussdiagramm zum Ablauf des erfindungsgemäßen Verfahrens.

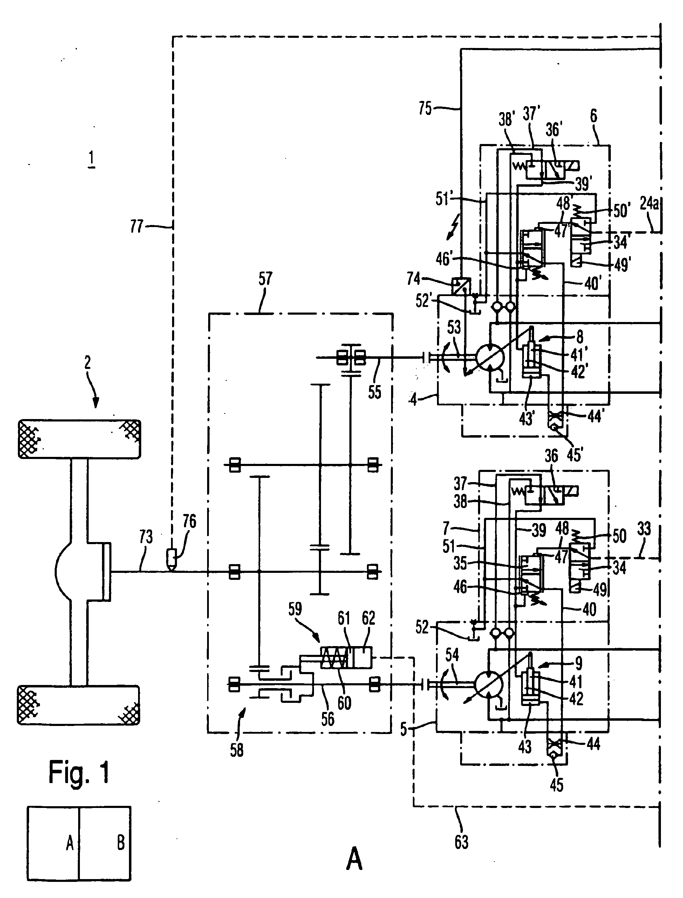

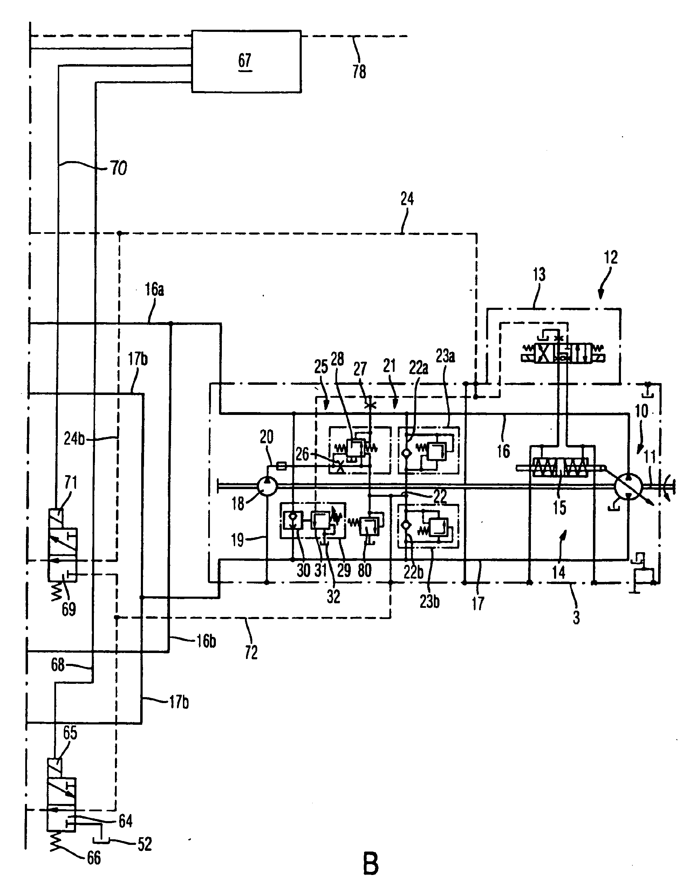

Die Fig. 1 zeigt eine vereinfachte Darstellung eines erfindungsgemäßen hydrostatischen Antriebs 1. Der hydrostatische Antrieb 1 ist zum Antrieb einer Fahrzeugachse 2 vorgesehen und umfasst neben einem nicht dargestellten primären Antriebsmotor, der beispielsweise eine Dieselbrennkraftmaschine eines Nutzfahrzeugs sein kann, eine Hydropumpeneinheit 3. Die Hydropumpeneinheit 3 ist mit einem ersten Hydromotor 4 und zumindest einem zweiten Hydromotor 5 in einem geschlossenen hydraulischen Kreislauf verbunden. Neben dem in der Fig. 1 dargestellten einen zweiten Hydromotor 5 können weitere zweite Hydromotoren 5 vorgesehen sein. Zur Verstellung des Schluckvolumens des ersten Hydromotors 4 ist eine erste Ventileinheit 6 vorgesehen, die über einen ersten Stellzylinder 8 auf einen Verstellmechanismus des ersten Hydromotors 4 wirkt. Ebenso ist für den zumindest einen zweiten Hydromotor 5 eine zweite Ventileinheit 7 vorgesehen, welche mit einem zweiten Stellzylinder 9 zusammenwirkt. Jeweils eine Ventileinheit 6, 7 bildet zusammen mit dem zugeordneten Stellzylinder 8, 9 eine Verstellvorrichtung für den jeweiligen Hydromotor 4, 5. Die Funktion der Verstellvorrichtungen wird nachfolgend noch detailliert erläutert.

Die Hydropumpeneinheit 3 umfasst eine Hydropumpe 10, welche in ihrem Fördervolumen einstellbar ist und zur Förderung in zwei Richtungen vorgesehen ist. Die Hydropumpe 10 wird durch eine Antriebswelle 11 angetrieben. Die Antriebswelle 11 ist mit einer nicht dargestellten Dieselbrennkraftmaschine verbunden. Zur Einstellung des Fördervolumens und der Förderrichtung der Hydropumpe 10 ist eine Pumpenverstellvorrichtung 10 vorgesehen, die ein Pumpenfahrtrichtungsventil 13 sowie einen Pumpenstellzylinder 14 umfasst. In dem Pumpenstellzylinder 14 ist ein Pumpenstellkolben 15 angeordnet, welcher aus einer federzentrierten Neutrallage heraus in Abhängigkeit von in entgegengesetzter Richtung angreifenden Steuerdrücken in zwei Richtungen auslenkbar ist. Der Pumpenstellkolben 15 ist mit dem Verstellmechanismus der Hydropumpe 10 verbunden. In Abhängigkeit von der Schaltposition des Pumpenfahrtrichtungsventils 13 wird jeweils eine der Stelldruckkammern des Pumpenstellzylinders 14 mit einem Tankvolumen und die andere Stelldruckkammer mit einer Druckmittelquelle verbunden. Die Druckmittelquelle liefert einen drehzahlabhängigen ersten Steuerdruck. Mit zunehmendem Steuerdruck, also zunehmender Drehzahl der Antriebswelle 11, wird die Hydropumpe 10 zunehmend in Richtung größeren Fördervolumens verstellt.

Mit den beiden Anschlüssen der Hydropumpe 10 ist eine erste Arbeitsleitung 16 bzw. eine zweite Arbeitsleitung 17 verbunden. Die erste Arbeitsleitung 16 teilt sich in einen ersten Arbeitsleitungszweig 16a und einen zweiten Arbeitsleitungszweig 16b. Ebenso verzweigt sich die zweite Arbeitsleitung 17 in einen dritten Arbeitsleitungszweig 17a und einen vierten Arbeitsleitungszweig 17b.

Der erste Hydromotor 4 ist mit dem ersten Arbeitsleitungszweig 16a und dem dritten Arbeitsleitungszweig 17a verbunden. Der zumindest eine zweite Hydromotor 5 ist mit dem zweiten Arbeitsleitungszweig 16b und dem vierten Arbeitsleitungszweig 17b verbunden. Der erste Hydromotor 4 und der zweite Hydromotor 5 sind somit mit der Hydropumpe 10 parallel verbunden. Das von der Hydropumpe 10 in die erste Arbeitsleitung 16 oder die zweite Arbeitsleitung 17 geförderte Druckmittel verteilt sich damit auf die beiden angeschlossenen Hydromotoren 4 und 5.

Zur Erzeugung eines drehzahlabhängigen ersten Steuerdrucks ist mit der Antriebswelle 11 eine Speisepumpe 18 verbunden. Die Speisepumpe 18 weist ein konstantes Hubvolumen auf, so dass die von ihr geförderte Druckmittelmenge abhängig von der Drehzahl der Antriebswelle 11 ist. Die Speisepumpe 18 saugt über eine Saugleitung 19 aus einem nicht dargestellten Tankvolumen Druckmittel an und fördert es in eine Förderdruckleitung 20. Die Speisepumpe 18 ist über die Förderdruckleitung 20 mit einem Speisesystem 21 verbunden. Das Speisesystem 21 umfasst eine Speiseleitung 22, welche sich in einen ersten Speiseleitungszweig 22a und einen zweiten Speiseleitungszweig 22b verzweigt. Der erste Speiseleitungsweg 22a mündet in die erste Arbeitsleitung 16 aus. Der zweite Speiseleitungszweig 22b mündet in die zweite Arbeitsleitung 17 aus.

Eine Steuerdruckleitung 24 ist mit der Förderdruckleitung 20 über eine Steuerdruckventileinheit 25 verbunden. Die Steuerdruckventileinheit 25 umfasst eine erste Drosselstelle 26, die in der Förderdruckleitung 20 angeordnet ist. Ferner umfasst die Steuerdruckventileinheit 25 ein Regelventil 28 und eine zweite Drosselstelle 27. Das Regelventil 28 ist eine variable Drossel, welche in entgegengesetzte Richtungen durch einen in der Förderdruckleitung 20 stromaufwärts der ersten Drosselstelle 26 und mit einem stromabwärts der ersten Drosselstelle 26 herrschenden Druck der Förderdruckleitung 20 beaufschlagt ist. An dem Regelventil 28 greift somit eine resultierende hydraulische Kraft an, welche proportional zu dem durch die erste Drosselstelle 26 in der Förderdruckleitung 20 fließenden Volumenstrom ist. Mit zunehmendem Volumenstrom durch die erste Drosselstelle 26 wird das Regelventil 28 zunehmend in seine geöffnete Position gebracht, in der es eine durchströmbare Verbindung von der Förderdruckleitung 20 in die Steuerdruckleitung 24 erzeugt. Stromabwärts des Regelventils 28 ist die zweite Drosselstelle 27 angeordnet. Der ausgangsseitig des Regelventils 28 herrschende Druck stromaufwärts der zweiten Drosselstelle 27 wirkt ebenfalls auf das Regelventil 28 zurück und beaufschlagt dieses gleichsinnig mit dem stromabwärts der ersten Drosselstelle 26 herrschenden Förderdruckleitungsdruck.

Die Speisedruckleitung 22 ist mit einem Speisedruckbegrenzungsventil 80 verbunden. Das Speisedruckbegrenzungsventil 80 wird durch eine Druckfeder in seiner geschlossenen Ausgangsposition gehalten. Entgegengesetzt zu der Kraft der Druckfeder wirkt auf das Speisedruckbegrenzungsventil 80 der in der Speisedruckleitung 22 herrschende Speisedruck. Übersteigt der Speisedruck in der Speisedruckleitung 22 einen durch die Druckfeder eingestellten Wert, so wird das Speisedruckbegrenzungsventil 80 in seine geöffnete Position gebracht. Durch das Speisedruckbegrenzungsventil 80 wird somit ein konstanter Speisedruck in dem Speisedrucksystem 21 eingestellt. Somit liegt stromabwärts der ersten Drosselstelle 26 ab einer bestimmten Mindestdrehzahl der Speisepumpe 18 ein konstanter Speisedruck vor. Aufgrund des zusätzlich zu dem Speisedruck in gleicher Richtung auf das Regelventil 28 wirkenden Ausgangsdrucks des Regelventils 28 und des in entgegengesetzter Richtung wirkenden Drucks stromaufwärts der ersten Drosselstelle 26 wird in der Steuerdruckleitung 24 ein erster Steuerdruck eingestellt, welcher proportional zur Drehzahl der Speisepumpe 18 und somit zur Drehzahl der Hydropumpeneinheit 3 ist.

Als Sicherheitseinrichtung ist ein Steuerdrucksicherheitsventil 29 vorgesehen, welches ein Wechselventil 30 aufweist. Das Wechselventil 30 ist eingangsseitig mit seinen beiden Eingangsanschlüssen mit der ersten Arbeitsleitung 16 bzw. der zweiten Arbeitsleitung 17 verbunden. Der jeweils höhere der Arbeitsleitungsdrücke in der ersten Arbeitsleitung 16 bzw. der zweiten Arbeitsleitung 17 wird von dem Wechselventil 30 einem Druckbegrenzungsventil 31 zugeführt. Das Druckbegrenzungsventil 31 ist ein federbelastetes Druckbegrenzungsventil 31, welches bei Überschreiten eines kritischen Drucks in der ersten Arbeitsleitung 16 oder der zweiten Arbeitsleitung 17 eine durchströmbare Verbindung aus der Steuerdruckleitung 24 in ein Tankvolumen 32 ermöglicht. Überschreitet also der Druck in der ersten Arbeitsleitung 16 oder der zweiten Arbeitsleitung 17 einen kritischen Grenzwert, so wird die Steuerdruckleitung 24 unabhängig von der jeweiligen Drehzahl der Speisepumpe 18 in das Tankvolumen entspannt. Der erste, normalerweise drehzahlabhängige Steuerdruck sinkt damit und der erste Hydromotor 4 und der zweite Hydromotor 5 werden in Richtung größeren Schluckvolumens verstellt. Infolgedessen steigt das Antriebsdrehmoment des hydrostatischen Antriebs an.

Zum Zuführen des ersten, drehzahlabhängigen Steuerdrucks zu den Verstellvorrichtungen der Hydromotoren 4, 5 teilt sich die Steuerdruckleitung 24 einen ersten Steuerdruckleitungszweig 24a und einen zweiten Steuerdruckleitungszweig 24b. Über den zweiten Steuerdruckleitungszweig 24b und eine Verbindungsleitung 33 wird der drehzahlabhängige erste Steuerdruck der zweiten Ventileinheit 7 zugeführt. Die zweite Ventileinheit 7 umfasst ein Pilotventil 34, ein Stelldruckregelventil 35 und ein Fahrtrichtungsventil 36. Über das Fahrtrichtungsventil 36 wird in Abhängigkeit von der Förderrichtung der Hydropumpe 10 eine erste Arbeitsdruckverbindungsleitung 37 oder eine zweite Arbeitsdruckverbindungsleitung 38 mit einer Stelldruckleitung 39 verbunden. In den Arbeitsdruckverbindungsleitungen 37, 38 ist jeweils ein in Richtung auf das Fahrtrichtungsventil 36 hin öffnendes Rückschlagventil angeordnet.In dem zweiten Stellzylinder 9 ist ein Stellkolben 41 angeordnet, der den zweiten Stellzylinder 9 in einen ersten Stelldruckraum 42 und einen zweiten Stelldruckraum 43 unterteilt. Der erste Stelldruckraum 42 ist permanent mit der Stelldruckleitung 39 verbunden. In dem ersten Stelldruckraum 42 wirkt somit immer der in der förderseitigen ersten oder zweiten Arbeitsleitung 16, 17 herrschende Arbeitsdruck. Der Arbeitsdruck beaufschlagt den Stellkolben 31 so, dass der zweite Hydromotor 5 in Richtung seines maximalen Schluckvolumens verstellt wird. Zur Einstellung des in dem zweiten Stelldruckraum 43 wirkenden entgegengesetzten Stelldrucks dient das Stelldruckregelventil 35. Über das Stelldruckregelventil 35 ist die Stelldruckleitung 39 mit einer Regelleitung 40 variabel gedrosselt verbindbar. In der in der Fig. 1 dargestellten Ausgangsstellung des Stelldruckregelventils 35 ist die Regelleitung 40 mit einer Entspannungsleitung 51 verbunden und der zweite Stelldruckraum 43 wird über die Regelleitung 40 und die Entspannungsleitung 51 in ein Tankvolumen 52 entspannt. Infolgedessen ist in der Ausgangssituation des hydrostatischen Antriebs 1 der Stellkolben 41 in seiner in der Figur 1 gezeigten unteren Endposition und somit der zweite Hydromotor 5 auf maximales Schluckvolumen eingestellt.

Das Stelldruckregelventil 35 wird durch die Kraft einer Druckfeder in dieser Ausgangsposition gehalten. Gleichsinnig zu der Kraft der Druckfeder wirkt an einer ersten Messfläche 46 der in der Stelldruckleitung 39 herrschende Arbeitsleitungsdruck. In entgegengesetzter Richtung wirkt an einer zweiten Messfläche 47 ein über eine Messleitung 48 zugeführter Steuerdruck. Steigt der an der zweiten Messfläche 47 herrschende Steuerdruck an, so wird das Stelldruckregelventil 35 in Richtung seiner zweiten Endposition verstellt. In der zweiten Endposition verbindet das Stelldruckregelventil 35 die Stelldruckleitung 39 mit der Regelleitung 40, so dass der zweite Stelldruckraum 43 zunehmend mit dem in der Stelldruckleitung 39 herrschenden Arbeitsleitungsruck beaufschlagt wird. Aufgrund der unterschiedlichen Flächenverhältnisse an dem Stellkolben 41 in dem ersten Stelldruckraum 42 und dem zweiten Stelldruckraum 43 wird bei Druckgleichheit in dem ersten Stelldruckraum 42 und dem zweiten Stelldruckraum 43 der Stellkolben 41 in Richtung seiner zweiten Endlage verstellt, wodurch der zweite Hydromotor 5 in Richtung seines minimalen Fördervolumens verstellt wird.

In der Regelleitung 40 sind parallel eine Drossel 44 sowie ein Rückschlagventil 45 angeordnet. Das Rückschlagventil 45 öffnet in Richtung auf den zweiten Stelldruckraum 43 hin und ermöglicht eine ungedrosselte Verbindung zur Verstellung des Hydromotors 5 in Richtung kleineren Schluckvolumens. Wird dagegen der zweite Stelldruckraum 43 in das Tankvolumen 42 entspannt, so geht das Rückschlagventil 45 in seine geschlossene Position. Die Entspannung des zweiten Stelldruckraums 43 kann somit lediglich über die parallel zu dem Rückschlagventil 45 angeordnete Drossel 44 erfolgen. Durch Dimensionierung der Drossel 44 kann die Charakteristik beim Verstellen des Hydromotors in Richtung größerer Schwenkwinkel eingestellt werden.

Die Messleitung 48 ist über das Pilotventil 34 mit der Verbindungsleitung 33 oder der Entspannungsleitung 51 verbindbar. Das Pilotventil 34 weist eine Feder 50 auf, welche das Pilotventil 34 in seiner in der Fig. 1 dargestellten ersten Schaltposition hält. In der ersten Schaltposition des Pilotventils 34, welches als einfaches Schaltventil ausgeführt ist, wird die Verbindungsleitung 33 mit der Messleitung 48 verbunden. In der zweiten Schaltposition des Pilotventils 34, in die das Pilotventil 34 bei Bestromen eines Elektromagneten 49 gebracht wird, wird dagegen die Messleitung 48 mit der Entspannungsleitung 51 verbunden und somit die hydraulische Kraft an der zweiten Messfläche 47 reduziert. Durch Bestromen des Elektromagneten 49 wird somit der zweite Hydromotor 5 auf sein maximales Schluckvolumen verstellt.

Die von dem Steuerdruck abhängige Verstellung des Schwenkwinkels des ersten Hydromotors 4 und des zweiten Hydromotors 5 ist prinzipiell identisch. Auf eine erneute Beschreibung sämtlicher übereinstimmender Elemente des ersten Hydromotors 4 wird daher verzichtet. Die Elemente sind mit korrespondierenden gestrichenen Bezugszeichen versehen.

Der wirksame Steuerdruck für den zweiten Hydromotor 5 ist umschaltbar. Hierzu ist die Verbindungsleitung 33 über ein Umschaltventil 69 entweder mit dem zweiten Steuerdruckleitungszweig 24b oder einer Speisedruckverbindungsleitung 72 verbunden. Die Speisedruckverbindungsleitung 72 ist mit der Speisedruckleitung 22 des Speisesystems 21 verbunden. In der Speisedruckverbindungsleitung 72 herrscht somit der durch das Speisedruckbegrenzungsventil 80 eingestellte Speisedruck. In der Steuerdruckleitung 24 herrscht dagegen aufgrund des Druckabfalls an dem Regelventil 28 sowie der nachgeordneten zweiten Drosselstelle 27 ein geringerer, drehzahlabhängiger Steuerdruck. Durch das Umschaltventil 69 kann somit die Verbindungsleitung 33 mit einem drehzahlabhängigen, ersten Steuerdruck oder mit einem höheren, zweiten Steuerdruck beaufschlagt werden. Die Einstellung des Schluckvolumens des zweiten Hydromotors 5 erfolgt somit abhängig von dem ersten oder dem zweiten Steuerdruck.

Solange sich das Umschaltventil 69 in seiner in der Fig. 1 dargestellten Ausgangsposition befindet, in der es durch die Kraft einer Druckfeder gehalten wird, befindet sich der zweite Hydromotor 5 im Regelbetrieb und wird drehzahlenabhängig geregelt. Aufgrund des drehzahlabhängigen, ersten Steuerdrucks wird an der zweiten Messfläche 47 des Stelldruckregelventils 35 eine drehzahlabhängige hydraulische Kraft erzeugt. Das Stelldruckregelventil 35 befindet sich deshalb jeweils in einer Gleichgewichtsposition, die über die Regelleitung 40 einen der Drehzahl der Antriebswelle 11 proportionalen Steuerdruck in dem zweiten Steuerdruckraum 43 erzeugt. Mit zunehmender Drehzahl der Antriebswelle 11 nimmt der Druck auf die zweite Messfläche 47 zu und der zweite Hydromotor 5 wird in Richtung kleineren Schluckvolumens verstellt.

Die drehzahlabhängige Verstellung des ersten Hydromotors 4 entspricht der drehzahlabhängigen Verstellung des zweiten Hydromotors 5. Um unnötige Wiederholungen zu vermeiden, wird auf eine erneute Beschreibung daher verzichtet.

Eine Abtriebswelle 53 des ersten Hydromotors 4 ist mit einer ersten Eingangswelle 55 eines Summiergetriebes 57 verbunden. Dementsprechend ist eine zweite Abtriebswelle 54 des ersten Hydromotors 5 mit einer zweiten Eingangswelle 56 des Summiergetriebes 57 verbunden. Solange beide Hydromotoren 4, 5 mit Druckmittel beaufschlagt werden und sich im Regelbetrieb der drehzahlabhängigen Regelung befinden, erzeugen daher beide Hydromotoren 4, 5 über ihre jeweiligen Abtriebswellen 53, 54 ein Drehmoment, welches über die Eingangswellen 55, 56 dem Summiergetriebe 57 zugeführt werden. Die eingangsseitig anliegenden Drehmomente werden über das Summiergetriebe 57 in nicht näher erläuterter Weise summiert und entsprechend den zwischen der den Eingangswellen 55, 56 und einer Getriebeausgangswelle 73 angeordneten Getriebeübersetzungen der angetriebenen Achse 2 des Fahrzeugs zugeführt.

Die Regelcharakteristik und der Regelbeginn können für den ersten und den zweiten Hydromotor 4, 5 unterschiedliche gewählt werden.

An der zweiten Eingangswelle 56 ist eine Kupplung 58 vorgesehen, welche die Verbindung zwischen der zweiten Eingangswelle 56 und der Getriebeausgangswelle 73 unterbrechen kann. Zum Betätigen der Kupplung 58 ist eine Betätigungseinrichtung 59 vorgesehen. Die Betätigungseinrichtung 59 umfasst einen Nehmerzylinder 60, in dem ein Kolben 61 angeordnet ist. Der Kolben 61 ist einseitig mit einer Druckfeder beaufschlagt. In entgegengesetzter Richtung wirkt in einer Stelldruckkammer 62 eine hydraulische Kraft auf den Kolben 61. Zum Erzeugen der hydraulischen Kraft ist die Stelldruckkammer 62 über eine Kupplungsdruckleitung 63 mit der Speisedruckverbindungsleitung 72 verbindbar. Zum Herstellen der Verbindung zwischen der Kupplungsdruckleitung 63 und der Speisedruckverbindungsleitung 72 ist ein Schaltventil 64 vorgesehen. Das Schaltventil 64 wird durch eine Druckfeder 66 in seiner Ausgangsposition gehalten. In dieser Ausgangsposition ist eine durchströmbare Verbindung zwischen der Speisedruckverbindungsleitung 72 und der Kupplungsdruckleitung 63 vorhanden.

Durch einen weiteren Elektromagneten 65 kann das Schaltventil 64 in seine zweite Schaltposition gebracht werden. In der zweiten Schaltposition wird durch das Schaltventil 64 die Kupplungsdruckleitung 63 mit dem Tankvolumen 52 verbunden. Für die nachfolgende Beschreibung sei angenommen, dass bei Anlegen eines Stroms über die elektrische Leitung 68 an den weiteren Elektromagneten 65 und die entsprechende Entspannung der Kupplungsdruckleitung 63 die Kupplung 58 eingekuppelt wird. Umgekehrt wird in der Ausgangsposition des Schaltventils 64 die Kupplung 58 eingekuppelt und somit eine Verbindung zwischen der zweiten Abtriebswelle 54 und der zweiten Eingangswelle 56 des Summiergetriebes 56 erzeugt.

In den dargestellten Positionen des Umschaltventils 69 sowie des Schaltventils 64 befindet sich der hydrostatische Antrieb 1 in einem ersten Betriebsmodus. In diesem ersten Betriebsmodus erfolgt eine drehzahlabhängige Regelung sowohl des ersten Hydromotors 4 als auch des zweiten Hydromotors 5. Die Kupplung 58 ist eingekuppelt, so dass beide Hydromotoren 4, 5 ein Drehmoment erzeugen, welches über das Summiergetriebe 57 summiert wird. Um das Fahren des Fahrzeugs in einem höheren Geschwindigkeitsbereich zu ermöglichen, wird ein erster Grenzwert für eine Fahrgeschwindigkeit des Fahrzeugs festgelegt. Bei Überschreiten des ersten Grenzwerts durch die Fahrgeschwindigkeit erfolgt der Antrieb lediglich durch den ersten Hydromotor 4. Der zweite Hydromotor 5 wird dann abgeschaltet. Werden weitere zweite Hydromotoren verwendet, welche parallel zu dem einen gezeigten zweiten Hydromotor 5 angeordnet sind, so werden vorzugsweise sämtliche weiteren zweiten Hydromotoren abgeschaltet. Zum Abschalten wird bei Überschreiten des ersten Grenzwerts durch die Fahrgeschwindigkeit durch die Fahrzeugelektrik 37 ein Schaltstrom über die weitere Leitung 70 an den Elektromagneten 71 des Umschaltventils 69 abgegeben. Infolgedessen wird das Umschaltventil 69 in seine zweite Schaltposition gebracht, in der die Speisedruckverbindungsleitung 72 mit der Verbindungsleitung 33 verbunden ist. In der Speisedruckverbindungsleitung 72 herrscht ein höherer, zweiter Steuerdruck, der infolgedessen auf die zweite Messfläche 47 des Stelldruckregelventils 35 wirkt. Das Stelldruckregelventil 35 wird in seine zweite Endposition gebracht und ein maximal möglicher Steuerdruck in dem zweiten Steuerdruckraum 43 erzeugt. Infolgedessen wird der zweite Hydromotor 5 auf ein verschwindendes Schluckvolumen gestellt.

Im Gegensatz zu dem ersten Hydromotor 4 kann der zweite Hydromotor 5 auf ein verschwindendes Schluckvolumen gestellt werden. Der erste Hydromotor 4 ist dagegen in seiner Schwenkbewegung durch einen vorzugsweise mechanischen Anschlag begrenzt. Der mechanische Anschlag legt ein minimales Schluckvolumen fest, bei dem der erste Hydromotor 4 die gesamte durch die Hydropumpe 10 geförderte Druckmittelmenge aufnehmen kann. Dieser Zustand legt die maximale Fahrgeschwindigkeit fest.

Durch das Verstellen des zweiten Hydromotors 5 auf verschwindendes Schluckvolumen wird der gesamte Druckmittelstrom, der durch die Hydropumpe 10 gefördert wird, durch den ersten Hydromotor 4 hindurch gefördert. Infolgedessen steigt die Fahrzeuggeschwindigkeit an.

Um unnötige Schleppverluste durch den zweiten Hydromotor 5 zu vermeiden, wird zeitlich versetzt nach dem Umschalten des Umschaltventils 69 über die Leitung 68 der weitere Elektromagnet 65 bestromt. Das Schaltventil 64 wird somit in seine zweite Position gebracht, in der die Stelldruckkammer 62 der Betätigungseinrichtung 59 in das Tankvolumen 52 entspannt wird. Infolgedessen wird die Kupplung 58 geöffnet und der zweite Hydromotor 5 abgekuppelt.

Zusätzlich zu dem ersten Grenzwert für die Fahrgeschwindigkeit ist ein zweiter Grenzwert für die Fahrgeschwindigkeit vorgesehen. Der zweite Grenzwert für die Fahrgeschwindigkeit liegt unterhalb des ersten Grenzwerts. Erst bei Unterschreiten des zweiten Grenzwerts durch die Fahrgeschwindigkeit wird der zweite Hydromotor 5 wieder hinzugeschaltet. Hierzu wird zunächst bei Unterschreiten des zweiten Grenzwerts durch die Fahrgeschwindigkeit der Stromfluss durch den weiteren Elektromagneten 65 abgeschaltet. Aufgrund der Kraft der Feder 66 wird das Schaltventil 64 wieder in seine Ausgangsposition gebracht und die Betätigungseinrichtung 59 der Kupplung 58 mit dem Speisedruck beaufschlagt und so der zweite Hydromotor 5 eingekuppelt.

Zeitlich versetzt hierzu, also nach dem Wiedereinkuppeln wird auch das Bestromen des Elektromagneten 71 beendet, woraufhin auch das Umschaltventil 69 in seine Ausgangslage zurückkehrt. In dieser Position ist die Verbindungsleitung 33 wieder mit dem zweiten Speisedruckleitungszweig 24b verbunden. Der zweite Hydromotor 5 ist nun ebenso wie der erste Hydromotor 4 drehzahlgeregelt.

Es existieren folglich zwei Schaltkriterien, die durch unterschiedliche Grenzwerte bezüglich der Fahrgeschwindigkeit festgelegt werden. Durch das Vorsehen eines ersten Grenzwerts und eines niedrigeren zweiten Grenzwerts wird verhindert, dass kurz nach dem Abschalten des zweiten Hydromotors 5 und dem Auskuppeln wieder eingekuppelt und der zweite Hydromotor 5 hinzugeschaltet wird. Sinkt also die Fahrgeschwindigkeit lediglich kurzfristig unter den ersten, höheren Grenzwert nicht aber unter den zweiten Grenzwert für die Fahrgeschwindigkeit ab, so wird die Betriebsart des hydrostatischen Antriebs 1, die sich zu diesem Zeitpunkt in einem zweiten Modus befindet, nicht verändert. Das Zuschalten und das Einkuppeln des zweiten Hydromotors 5 erfolgt erst bei einem weiteren Absinken der Fahrgeschwindigkeit, wobei hierzu das Fahrzeug mit seiner Geschwindigkeit unter den zweiten Grenzwert absinken muss.

Zur Ermittlung der Fahrgeschwindigkeit ist es in der Fig. 1 dargestellt, dass die Schwenkwinkeleinstellung des ersten Hydromotors 4 durch einen Schwenkwinkelsensor 74 erfasst wird. Der jeweils eingestellte Schwenkwinkel wird über eine Sensorleitung 75 an die Fahrzeugelektrik 67 übermittelt. In der Fahrzeugelektrik 67 wird ein Grenzwertvergleich zwischen der ermittelten Ist-Fahrgeschwindigkeit und einem abgespeicherten ersten Grenzwert und einem abgespeicherten zweiten Grenzwert durchgeführt.

Anstelle der Ermittlung der Fahrgeschwindigkeit aufgrund eines Signals eines Schwenkwinkelsensors 74 ist es auch möglich, die Drehzahl der Getriebeausgangswelle 73 durch einen Drehzahlsensor 76 zu erfassen. Diese Alternativlösung ist in der Fig. 1 gestrichelt dargestellt. Als weitere Alternative kann ein Tachosignal herangezogen werden, welches über eine Signalleitung 77 zugeführt wird.

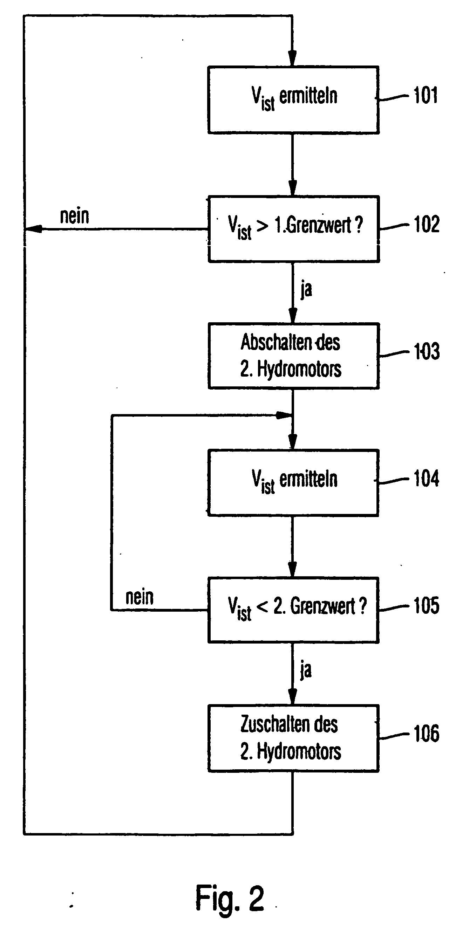

In der Fig. 2 ist ein vereinfachtes Flussdiagramm des erfindungsgemäßen Verfahrens dargestellt. Zunächst wird eine Ist-Fahrzeuggeschwindigkeit Vᵢₛₜ ermittelt (101). Die ermittelte Fahrzeuggeschwindigkeit wird mit einem ersten Grenzwert verglichen (102). Ist die Fahrzeugistgeschwindigkeit Vᵢₛₜ größer als der erste Grenzwert, so werden das Umschaltventil 69 und das Schaltventil 64 nacheinander betätigt (103). Die Fahrzeuggeschwindigkeit Vᵢₛₜ wird weiterhin überwacht (104) und mit dem zweiten, niedrigeren Grenzwert verglichen (105). Ist die Fahrzeuggeschwindigkeit Vᵢₛₜ kleiner als der zweite Grenzwert, so werden wiederum das Umschaltventil 69 und das Schaltventil 64, allerdings in umgekehrter Reihenfolge und wiederum zeitlich versetzt betätigt (106).

Liegt dagegen die Fahrgeschwindigkeit Vᵢₛₜ weiterhin über dem zweiten Grenzwert, so erfolgt keine Betätigung des Umschaltventils 69 und des Schaltventils 64, sondern es wird lediglich in festgelegten Zeitabständen die Fahrzeuggeschwindigkeit erneut erfasst (104) und mit dem zweiten Grenzwert verglichen. Ist in Schritt 102 festgestellt worden, dass der erste Grenzwert durch die aktuelle Fahrzeuggeschwindigkeit Vᵢₛₜ nicht überschritten wird, so wird ebenfalls ohne Betätigung des Umschaltventils 69 und des Schaltventils 64 die Fahrzeuggeschwindigkeit weiterhin erfasst (101) und die jeweils aktuelle Ist-Geschwindigkeit mit dem ersten Grenzwert verglichen (102).

Die Erfindung ist nicht auf das dargestellte bevorzugte Ausführungsbeispiel beschränkt. Einzelne Merkmale der bevorzugten Ausführungsform können miteinander auch unter Weglassen anderer Merkmale kombiniert werden.

## Patentansprüche

1. Hydrostatischer Antrieb mit zumindest einer Hydropumpeneinheit (3) und einem ersten Hydromotor (4) und zumindest einem zweiten Hydromotor (5), wobei die Hydromotoren (4, 5) mit einer ersten Eingangswelle (55) bzw. mit zumindest einer zweiten Eingangswelle (56) eines Summiergetriebes (57) verbunden sind und jeweils eine Verstellvorrichtung (6, 8; 7, 9) zur Verstellung ihres Schluckvolumens aufweisen, die jeweils mit einem von einer Drehzahl der Hydropumpeneinheit (3) abhängigen ersten Steuerdruck beaufschlagbar ist, **dadurch gekennzeichnet, dass** zumindest die Verstellvorrichtung (7, 9) zumindest eines zweiten Hydromotors (5) in Abhängigkeit von einer Fahrgeschwindigkeit mit dem drehzahlabhängigen ersten Steuerdruck oder einem höheren zweiten Steuerdrucks beaufschlagbar ist, und dass die Verstellvorrichtung (7, 9) des zumindest einen zweiten Hydromotors (5) bei Überschreiten eines ersten Grenzwerts durch die Fahrgeschwindigkeit mit dem höheren zweiten Steuerdruck beaufschlagt ist.

2. Hydrostatischer Antrieb nach Anspruch 1,
**dadurch gekennzeichnet,**
**dass** die Verstellvorrichtung (7, 9) des zumindest einen zweiten Hydromotors (5) bei Unterschreiten eines niedrigeren, zweiten Grenzwerts durch die Fahrgeschwindigkeit mit dem drehzahlabhängigen ersten Steuerdruck beaufschlagt ist.

3. Hydrostatischer Antrieb nach Anspruch 1 oder 2,
**dadurch gekennzeichnet,**
**dass** der höhere, zweite Steuerdruck ein Speisedruck eines Speisesystems (21) der Hydropumpeneinheit (3) ist.

4. Hydrostatischer Antrieb nach einem der Ansprüche 1 bis 3,
**dadurch gekennzeichnet,**
**dass** zum Umschalten zwischen dem ersten und dem zweiten Speisedruck ein Umschaltventil (69) in einem zu der Verstellvorrichtung (7, 9) des zweiten Hydromotors führenden Steuerdruckzuleitungszweig (24b) vorgesehen ist.

5. Hydrostatischer Antrieb nach einem der Ansprüche 1 bis 4,
**dadurch gekennzeichnet,**
**dass** die Verstellvorrichtungen (6, 8; 7, 9) jeweils zumindest einen Stellzylinder (8, 9) und eine Ventileinheit (6, 7) mit einem Pilotventil (34, 34') umfassen.

6. Hydrostatischer Antrieb nach einem der Ansprüche 1 bis 5,
**dadurch gekennzeichnet,**
**dass** das Summiergetriebe (57) zumindest eine Kopplung (58) zum Abkuppeln des zweiten Hydromotors (5) aufweist, die mittels des höheren, zweiten Steuerdrucks betätigbar ist.

7. Hydrostatischer Antrieb nach Anspruch 6,
**dadurch gekennzeichnet,**
**dass** die Kupplung (58) eine druckbeaufschlagbare Betätigungseinrichtung (59) aufweist, die über eine Kupplungsdruckieitung (63) mit einem Schaltventil (64) verbunden ist.

8. Hydrostatischer Antrieb nach Anspruch 7,
**dadurch gekennzeichnet,**
**dass** durch das Schaltventil (64) die Kupplungsdruckleitung (63) mit dem Speisesystem (21) oder einem Tankvolumen (52) verbindbar ist.

9. Hydrostatischer Antrieb nach einem der Ansprüche 1 bis 8,
**dadurch gekennzeichnet,**
**dass** der erste Hydromotor (4) auf einen von Null verschiedenes, minimales Schluckvolumen einstellbar ist und der zumindest eine zweite Hydromotor (5) auf ein verschwindendes Schluckvolumen einstellbar ist.

10. Verfahren zur Steuerung eines hydrostatischen Antriebe mit zumindest einer Hydropumpeneinheit (3) und einem ersten Hydromotor (4) und zumindest einem zweiten Hydromotor (5), wobei die Hydromotoren (4, 5) mit einer ersten und zumindest einer zweiten Eingangswelle (55, 56) eines Summiergetriebes (57) verbunden sind, mit folgenden Verfahrensschritten:
- Erzeugen eines von einer Drehzahl der Hydropumpeneinheit (3) abhängigen ersten Steuerdrucks und eines höheren zweiten Steuerdrucks
- Ermitteln einer Ist-Fahrzeuggeschwindigkeit (vᵢₛₜ)
- Regeln des zumindest einen zweiten Hydromotors (5) in Abhängigkeit von dem drehzahlabhängigen, ersten Steuerdruck durch Beaufschlagen einer Verstellvorrichtung (7, 9) des zumindest einen zweiten Hydromotors (3) mit dem ersten Steuerdruck
**gekennzeichnet durch**:
- Beaufschlagen der Verstellvorrichtung (7, 9) des zumindest einen zweiten Hydromotors (5) mit dem höheren zweiten Steuerdruck, wenn eine Fahrzeuggeschwindigkeit (vᵢₛₜ) über einen ersten Grenzwert steigt.

11. Verfahren nach Anspruch 10,
**dadurch gekennzeichnet,**
**dass**, wenn die Verstellvorrichtung (7, 9) des zweiten Hydromotors (5) mit dem höheren zweiten Steuerdruck beaufschlagt ist und die Fahrzeuggesc.hwindigkeit (Vᵢₛₜ) einen zweiten Grenzwert unterschreitet, die Verstellvorrichtung (7, 9) des zweiten Hydromotors (5) mit dem drehzahlabhängigen ersten Steuerdruck beaufschlagt wird.

12. Verfahren nach Anspruch 11,
**dadurch gekennzeichnet,**
**dass** bei Überschreiten des ersten Grenzwerts durch die Fahrzeuggeschwindigkeit (vᵢₛₜ) der zweite Hydromotor (5) abgekuppelt wird.

13. Verfahren nach Anspruch 12,
**dadurch gekennzeichnet,**
**dass** das Abkuppeln des zweiten Hydromotors (5) zeitlich nach dem Beaufschlagen der Verstellvorrichtung (7, 9)des zweiten Hydromotors (5) mit dem höheren zweiten Steuerdruck erfolgt.

14. Verfahren nach einem der Ansprüche 10 bis 13,
**dadurch gekennzeichnet,**
**dass** bei Unterschreiten des zweiten Grenzwerts durch die Fahrzeuggeschwindigkeit (vᵢₛₜ) die oder zumindest eine zweiten Hydromotor (5) eingekoppelt wird.

15. Verfahren nach Anspruch 14,
**dadurch gekennzeichnet,**
**dass** das Einkuppeln zeitlich vor der Beaufschlagung der Verstellvorrichtung (7, 9) des zumindest einen zweiten Hydromotors (5) erfolgt.

16. Verfahren nach einem der Ansprüche 10 bis 15,
**dadurch gekennzeichnet,**
**dass** zur Ermittlung der Fahrzeuggeschwindigkeit (vᵢₛₜ) eine Abtriebsdrehzahl des Summiergetriebes (57) erfasst wird.

17. Verfahren nach einem der Ansprüche 10 bis 15,
**dadurch gekennzeichnet,**
**dass** zur Ermittlung der Fahrzeuggeschwindigkeit (vᵢₛₜ) eine Schwenkwinkeleinstellung des ersten Hydromotors (4) erfasst wird.

## Claims

1. Hydrostatic drive with at least one hydraulic pump unit (3) and a first hydraulic motor (4) and at least one second hydraulic motor (5), wherein the hydraulic motors (4, 5) are connected to a first input shaft (55) and to at least one second input shaft (56), respectively, of a summator gear (57) and in each case have an adjusting device (6, 8; 7, 9) for adjusting their absorption volume, which device can in each case be acted upon by a first control pressure which is dependent upon a rotational speed of the hydraulic pump unit (3), **characterised in**
**that** at least the adjusting device (7, 9) of at least one second hydraulic motor (5) can be acted upon by the rotational speed-dependent first control pressure or a higher second control pressure in accordance with a travelling speed, and that the adjusting device (7, 9) of the at least one second hydraulic motor (5) is acted upon by the higher second control pressure when the travelling speed exceeds a first limit value.

2. Hydrostatic drive according to Claim 1,
**characterised in**
**that** the adjusting device (7, 9) of the at least one second hydraulic motor (5) is acted upon by the rotational speed-dependent first control pressure when the travelling speed falls below a lower, second limit value.

3. Hydrostatic drive according to Claim 1 or 2,
**characterised in**
**that** the higher, second control pressure is a feed pressure of a feed system (21) of the hydraulic pump unit (3).

4. Hydrostatic drive according to any one of Claims 1 to 3,
**characterised in**
**that** a changeover valve (69) is provided in a control pressure supply branch (24b) leading to the adjusting device (7, 9) of the second hydraulic motor in order to change over between the first and the second feed pressure.

5. Hydrostatic drive according to any one of Claims 1 to 4,
**characterised in**
**that** the adjusting devices (6, 8; 7, 9) in each case comprise at least one operating cylinder (8, 9) and one valve unit (6, 7) with a pilot valve (34, 34').

6. Hydrostatic drive according to any one of Claims 1 to 5,
**characterised in**
**that** the summator gear (57) has at least one coupling (58) for disengaging the second hydraulic motor which coupling can be actuated by means of the higher, second control pressure.

7. Hydrostatic drive according to Claim 6,
**characterised in**
**that** the coupling (58) has an actuating device (59) which can be pressurised and is connected via a coupling pressure line (63) to a switching valve (64).

8. Hydrostatic drive according to Claim 7,
**characterised in**
**that** the coupling pressure line (63) can be connected to the feed system (21) or a tank volume (52) by the switching valve (64).

9. Hydrostatic drive according to any one of Claims 1 to 8,
**characterised in**
**that** the first hydraulic motor (4) can be set to a minimal absorption volume which differs from zero, and the at least one second hydraulic motor (5) can be set to an infinitesimal absorption volume.

10. Method for controlling a hydrostatic drive with at least one hydraulic pump unit (3) and a first hydraulic motor (4) and at least one second hydraulic motor (5), wherein the hydraulic motors (4, 5) are connected to a first and at least one second input shaft (55, 56) of a summator gear (57), comprising the following method steps:
- generating a first control pressure which is dependent on a rotational speed of the hydraulic pump unit (3) and a higher second control pressure
- establishing an actual vehicle speed (vᵢₛₜ)
- regulating the at least one second hydraulic motor (5) in accordance with the rotational speed-dependent, first control pressure by acting upon an adjusting device (7, 9) of the at least one second hydraulic motor (3) with the first control pressure
**characterised by**:
- acting upon the adjusting device (7, 9) of the at least one second hydraulic motor (5) with the higher second control pressure when a vehicle speed (vᵢₛₜ) rises above a first limit value.

11. Method according to Claim 10,
**characterised in**
**that**, when the adjusting device (7, 9) of the second hydraulic motor (5) is acted upon by the higher second control pressure and the vehicle speed (vᵢₛₜ) falls below a second limit value, the adjusting device (7, 9) of the second hydraulic motor (5) is acted upon by the rotational speed-dependent first control pressure.

12. Method according to Claim 11,
**characterised in**
**that** the second hydraulic motor (5) is disengaged when the vehicle speed (vᵢₛₜ) exceeds the first limit value.

13. Method according to Claim 12,
**characterised in**
**that** the disengagement of the second hydraulic motor (5) takes place after the adjusting device (7, 9) of the second hydraulic motor (5) has been acted upon by the higher second control pressure in terms of time.

14. Method according to any one of Claims 10 to 13,
**characterised in**
**that** the the at least one second hydraulic motor (5) is engaged when the vehicle speed (vᵢₛₜ) falls below the second limit value.

15. Method according to Claim 14,
**characterised in**
**that** the engagement takes place before the adjusting device (7, 9) of the at least one second hydraulic motor (5) is acted upon in terms of time.

16. Method according to any one of Claims 10 to 15,
**characterised in**
**that** an output speed of the summator gear (57) is detected in order to establish the vehicle speed (vᵢₛᵢₜ).

17. Method according to any one of Claims 10 to 15,
**characterised in**
**that** a pivoting angle setting of the first hydraulic motor (4) is detected in order to establish the vehicle speed (vᵢₛₜ)_{.}

## Revendications

1. Entraînement hydrostatique avec au moins une unité de pompe hydraulique (3) et un premier moteur hydraulique (4) et au moins un deuxième moteur hydraulique (5), les moteurs hydrauliques (4, 5) étant reliés à un premier arbre d'entrée (55) respectivement à au moins un deuxième arbre d'entrée (56) d'un engrenage additif (57) et présentant chacun un dispositif de réglage (6, 8 ; 7, 9) pour le réglage de leur volume d'admission, qui peut être sollicité respectivement en une première pression de commande dépendant d'une vitesse de rotation de l'unité de pompe hydraulique (3), **caractérisé en ce qu'**au moins le dispositif de réglage (7, 9) d'au moins un deuxième moteur hydraulique (5) peut être sollicité en fonction d'une vitesse de marche en la première pression de commande dépendant de la vitesse de rotation ou en une deuxième pression de commande supérieure, et **en ce que** le dispositif de réglage (7, 9) dudit au moins un deuxième moteur hydraulique (5) est sollicité en la deuxième pression de commande supérieure en cas de dépassement d'une première valeur limite par la vitesse de marche.

2. Entraînement hydrostatique selon la revendication 1,
**caractérisé en ce**
**que** le dispositif de réglage (7, 9) dudit au moins un deuxième moteur hydraulique (5) est sollicité en la première pression de commande dépendant de la vitesse de rotation en cas de passage sous une deuxième valeur limite plus basse par la vitesse de marche.

3. Entraînement hydrostatique selon la revendication 1 ou 2,
**caractérisé en ce**
**que** la deuxième pression de commande supérieure est une pression d'alimentation d'un système d'alimentation (21) de l'unité de pompe hydraulique (3).

4. Entraînement hydrostatique selon l'une quelconque des revendications 1 à 3,
**caractérisé en ce**
**qu'**une soupape de commutation (69) est prévue dans une dérivation de conduite d'amenée de pression de commande (24b) menant au dispositif de réglage (7, 9) du deuxième moteur hydraulique pour commuter entre la première et la deuxième pression d'alimentation.

5. Entraînement hydrostatique selon l'une quelconque des revendications 1 à 4,
**caractérisé en ce**
**que** les dispositifs de réglage (6, 8 ; 7, 9) comprennent chacun au moins un vérin de réglage (8, 9) et une unité de distribution (6, 7) avec une soupape de pilotage (34, 34').

6. Entraînement hydrostatique selon l'une quelconque des revendications 1 à 5,
**caractérisé en ce**
**que** l'engrenage additif (57) présente au moins un accouplement (58) pour le désaccouplement du deuxième moteur hydraulique (5), qui peut être actionné au moyen de la deuxième pression de commande supérieure.

7. Entraînement hydrostatique selon la revendication 6,
**caractérisé en ce**
**que** l'accouplement (58) présente un dispositif d'actionnement (59) pouvant être sollicité en pression, lequel est relié par une conduite de pression d'accouplement (63) à un distributeur de commutation (64).

8. Entraînement hydrostatique selon la revendication 7,
**caractérisé en ce**
**que** la conduite de pression d'accouplement (63) peut être reliée par le distributeur de commutation (64) au système d'alimentation (21) ou à un volume de remplissage du réservoir (52).

9. Entraînement hydrostatique selon l'une quelconque des revendications 1 à 8,
**caractérisé en ce**
**que** le premier moteur hydraulique (4) peut être réglé à un volume d'admission minimal, différent de zéro et ledit au moins un deuxième moteur hydraulique (5) peut être réglé à un volume d'admission infiniment petit.

10. Procédé de commande d'un entraînement hydrostatique avec au moins une unité de pompe hydraulique (3) et un premier moteur hydraulique (4) et au moins un deuxième moteur hydraulique (5), les moteurs hydrauliques (4, 5) étant reliés à un premier et au moins à un deuxième arbres d'entrée (55, 56) d'un engrenage additif (57), comportant les étapes de procédé suivantes :
- générer une première pression de commande dépendant d'une vitesse de rotation de l'unité de pompe hydraulique (3), et une deuxième pression de commande supérieure
- déterminer une vitesse du véhicule réelle (vᵢₛₜ)
- réguler ledit au moins un deuxième moteur hydraulique (5) en fonction de la première pression de commande dépendant de la vitesse de rotation par sollicitation d'un dispositif de réglage (7, 9) dudit au moins un deuxième moteur hydraulique (3) en la première pression de commande, **caractérisé par** :
- solliciter le dispositif de réglage (7, 9) dudit au moins un deuxième moteur hydraulique (5) en la deuxième pression de commande supérieure, si une vitesse du véhicule (vᵢₛₜ) dépasse une première valeur limite.

11. Procédé selon la revendication 10,
**caractérisé en ce**
**que** si le dispositif de réglage (7, 9) du deuxième moteur hydraulique (5) est sollicité en la deuxième pression de commande supérieure et la vitesse du véhicule (vᵢₛₜ) est inférieure à une deuxième valeur limite, le dispositif de réglage (7, 9) du deuxième moteur hydraulique (5) est sollicité en la première pression de commande dépendant de la vitesse de rotation.

12. Procédé selon la revendication 11,
**caractérisé en ce**
**que** le deuxième moteur hydraulique (5) est désaccouplé en cas de dépassement de la première valeur limite par la vitesse du véhicule (vᵢₛₜ).

13. Procédé selon la revendication 12,
**caractérisé en ce**
**que** le désaccouplement du deuxième moteur hydraulique (5) est effectué temporellement après la sollicitation du dispositif de réglage (7, 9) du deuxième moteur hydraulique (5) en la deuxième pression de commande supérieure.

14. Procédé selon l'une quelconque des revendications 10 à 13,
**caractérisé en ce**
**que** ledit au moins un deuxième moteur hydraulique (5) est accouplé en cas de passage sous la deuxième valeur limite par la vitesse du véhicule (vᵢₛₜ).

15. Procédé selon la revendication 14,
**caractérisé en ce**
**que** l'accouplement est effectué temporellement avant la sollicitation du dispositif de réglage (7, 9) dudit au moins un deuxième moteur hydraulique (5).

16. Procédé selon l'une quelconque des revendications 10 à 15,
**caractérisé en ce**
**qu'**une vitesse de rotation de sortie de l'engrenage additif (57) est détectée pour déterminer la vitesse du véhicule (vᵢₛₜ).

17. Procédé selon l'une quelconque des revendications 10 à 15,
**caractérisé en ce**
**qu'**un réglage d'angle de pivotement du premier moteur hydraulique (4) est détecté pour déterminer la vitesse du véhicule (vᵢₛₜ).
